# EUROPEAN PATENT APPLICATION

(11) **EP 4 624 733 A2**
(43) Date of publication of application: **01.10.2025**
(21) Application number: 25166144.3
(22) Date of filing: 25.03.2025
(51) Int. Cl.: F02C 3/10, B64D 33/04, F02C 6/20

(54) **OPEN PUSHER ROTOR WITH REMOTE EXHAUST**

(30) Priority: 25.03.2024 US 202418614971
(71) Applicant: RTX Corporation, Farmington, CT 06032 (US)
(72) Inventor: MORTON, Jeffrey T., Farmington, 06032 (US); SOBANSKI, Jon Erik, Farmington, 06032 (US); BREAULT, Andrew E., Farmington, 06032 (US)
(74) Representative: Dehns

(57) **Abstract**

A gas turbine engine (100) includes a compressor section and a combustor (116) that is configured to receive compressed air from the compressor section. A turbine section is positioned downstream of the combustor (116) and configured to receive an exhaust flow from the combustor (116). The turbine section includes a turbine rotor (108,114) configured to drive a compressor rotor (104;110). An open pusher rotor system is mounted downstream of the turbine section, and driven by a propulsor turbine rotor (118) in the turbine section. An exhaust duct (128) is downstream of the propulsor turbine rotor (118). The exhaust duct (128) extends to an exhaust exit (130) such that a flow path of the exhaust flow leaving the exhaust exit (130) is directed away from the open pusher rotor system.

## Description

### BACKGROUND

Gas turbine engines as known, typically include a propulsor providing propulsion air. The gas turbine engine will also include a compressor compressing air that passes into a combustor. The air is mixed with fuel and ignited. Products of the combustion pass downstream over turbine rotors, driving them to rotate.

One type of propulsor is a propfan, or an open rotor configuration in which the rotor is exposed to an environment external to the engine. Propfans can be configured as either tractor-type or pusher type rotors. While both configurations are viable and have been demonstrated, there is room for improvement in the art.

### SUMMARY

According to an aspect of the present invention, there is provided a gas turbine engine that includes a compressor section. A combustor is configured to receive compressed air from the compressor section. A turbine section is positioned downstream of the combustor and configured to receive an exhaust flow from the combustor. The turbine section includes a turbine rotor configured to drive a compressor rotor. An open pusher rotor system is mounted downstream of the turbine section, and driven by a propulsor turbine rotor in the turbine section. An exhaust duct is downstream of the propulsor turbine rotor. The exhaust duct extends to an exhaust exit such that a flow path of the exhaust flow leaving the exhaust exit is directed away from the open pusher rotor system.

Optionally, and in accordance with the above, the propulsor turbine rotor is a free turbine, which is downstream of the turbine rotor.

Optionally, and in accordance with any of the above, further includes a drive shaft extending through a tube. A first end of the tube is located within the exhaust duct and a second end of the tube is located outside of the exhaust duct.

Optionally, and in accordance with any of the above, an exhaust inlet to the exhaust duct is generally circular, with the tube extending through a center of the circle.

Optionally, and in accordance with any of the above, the exhaust duct bends away from the circular shaped exhaust inlet, to the exhaust exit.

Optionally, and in accordance with any of the above, the exhaust inlet and the drive shaft are coaxial.

Optionally, and in accordance with any of the above, a fairing is positioned radially outward of the tube, and the fairing has an aerodynamic shape.

Optionally, and in accordance with any of the above, an exhaust inlet to the exhaust duct is generally circular, with the tube extending through a center of the circle.

Optionally, and in accordance with any of the above, the open pusher rotor system include at least two counter rotating pusher rotors.

According to another aspect of the present invention, there is provided a propulsion system that includes a gas turbine engine including a compressor section. A combustor is configured to receive compressed air from the compressor section. A turbine section is positioned downstream of the combustor and configured to receive an exhaust flow from the combustor. The turbine section includes a turbine rotor to drive a compressor rotor. At least one propulsor (e.g. a pusher rotor) is mounted downstream of the turbine section, and driven by a propulsor turbine rotor in the turbine section. An exhaust duct is downstream of the propulsor turbine rotor. The exhaust duct extends through at least one of a wing or a fuselage of an aircraft to an exhaust exit such that a flow path of the exhaust flow is directed away from the at least one propulsor.

This aspect may extend to an aircraft comprising the propulsion system and a fuselage and/or a wing, with the exhaust duct extending through the wing and/or the fuselage.

Optionally, and in accordance with any of the above, the propulsor turbine rotor is a free turbine, which is downstream of the turbine rotors.

Optionally, and in accordance with any of the above, further includes a drive shaft extending through a tube. A first end of the tube is located within the exhaust duct and a second end of the tube is located outside of the exhaust duct.

Optionally, and in accordance with any of the above, an exhaust inlet to the exhaust duct is generally circular shaped, with the tube extending through a center of the circle shape.

Optionally, and in accordance with any of the above, at the exhaust exit, a downstream end of the tube is fully outside the exhaust duct.

Optionally, and in accordance with any of the above, the exhaust duct passes through the fuselage to the exhaust exit.

Optionally, and in accordance with any of the above, the exhaust duct extends through the wing to the exhaust exit located at a trailing edge of the wing.

Optionally, and in accordance with any of the above, the engine is mounted adjacent a tail of the aircraft through a mount pylon, and the exhaust duct extends into the mount pylon.

Optionally, and in accordance with any of the above, the exhaust duct includes a heat exchanger configured to heat a second fluid with the exhaust flow.

Optionally, and in accordance with any of the above, the second fluid is a fuel.

Optionally, and in accordance with any of the above, further includes a generator turbine configured to be driven by the second fluid to generate electrical power.

The present invention may include any one or more of the individual features disclosed above and/or below alone or in any combination thereof.

These and other features of the present invention can be best understood from the following specification and drawings, the following of which is a brief description.

### BRIEF DESCRIPTION OF THE DRAWINGS

Figure 1A shows a prior art engine.
Figure 1B schematically shows an example engine under the current disclosure.
Figure 2 shows an example exhaust for products of combustion from an engine, such as that illustrated in Figure 1B.
Figure 3A is a cross-sectional view at section A-A of Figure 2.
Figure 3B is a cross-sectional view at Section B-B of Figure 2.
Figure 3C is a cross-sectional view along line C-C of Figure 2.
Figure 3D is a cross-sectional view along line D-D of Figure 2.
Figure 4 shows an optional embodiment of an internal tube structure with aerodynamic features.
Figure 5A shows a first installation embodiment of an engine, such as that illustrated in Figure 2, on an aircraft.
Figure 5B is a top view of the Figure 5A embodiment.
Figure 6 shows a second installation embodiment of an engine, such as that illustrated in Figure 2, on an aircraft.
Figure 7A shows a third installation embodiment of an engine, such as that illustrated in Figure 2, on an aircraft.
Figure 7B shows a schematic of the Figure 7A embodiment.
Figure 8A shows an optional embodiment wherein heat from an exhaust is captured.
Figure 8B shows an alternative to the Figure 8A optional embodiment.

### DETAILED DESCRIPTION

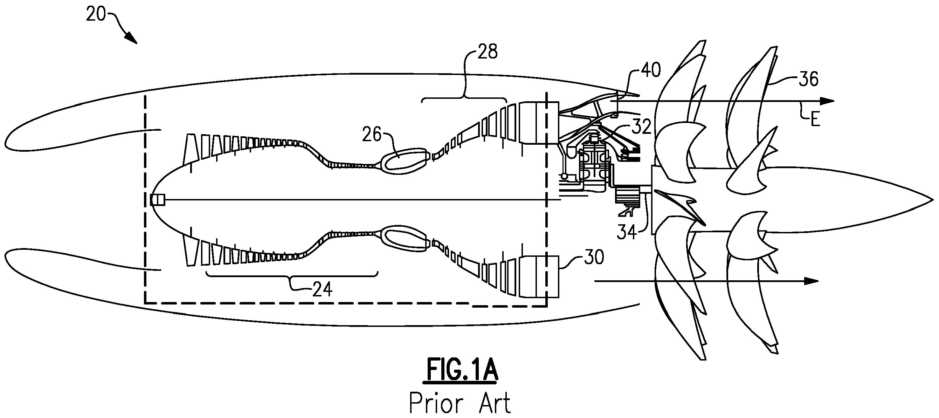

Figure 1A shows a prior art engine 20. A compressor section 24 compresses air and delivers it into a combustor 26. The air is mixed with fuel and ignited in the combustor 26. Products of that combustion pass downstream through a turbine section 28, driving turbine rotors to rotate. The turbine rotors, in turn, rotate the compressor rotors.

A free turbine 30 is also driven by the products of combustion, and drives a gear reduction 32 to, in turn, drive a shaft 34. The shaft 34 drives an open pusher rotor 36. As illustrated in Figure 1A, an open pusher rotor 36 is a propfan configuration in which the rotor system is exposed to an environment surrounding the engine 20. That is, the open pusher rotor 36 is not ducted or encased in a nacelle or other fan case.

A pusher rotor has some advantages over tractor configurations. Among them is the ability to use a free turbine 30, and also to include a relatively short shaft 34 driving the open pusher rotor 36. In a tractor configuration, the shaft must extend through the length of the engine to drive the propulsor.

However, the prior art engine 20 does have some challenges. Among them is the exhaust 40. Exhaust 40 delivers hot products of combustion downstream of the free turbine 30 into a path E to pass across the pusher rotor 36. This raises challenges with regard to materials and other aspects of the pusher rotor 36.

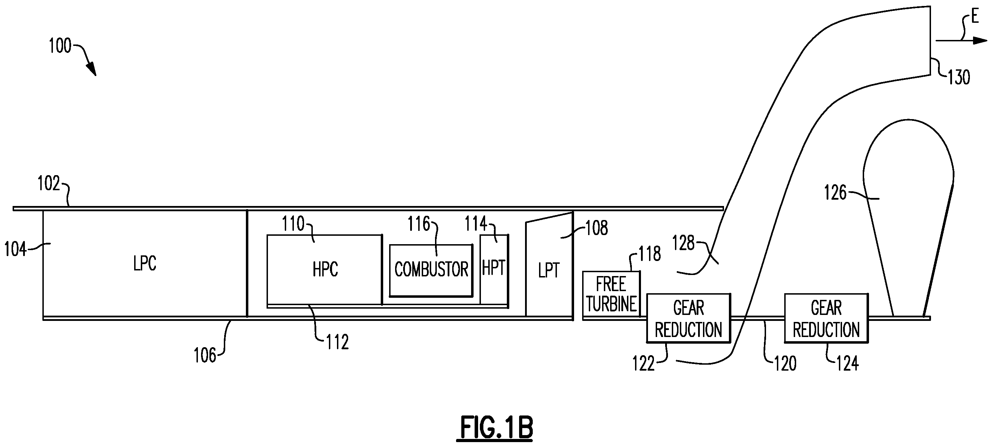

Figure 1B schematically shows an engine 100 that improves upon the Figure 1A engine. A core housing 102 houses a low pressure compressor rotor 104 which is driven by a shaft 106 through a low pressure turbine rotor 108. A high pressure compressor rotor 110 is driven by a shaft 112 through a high pressure turbine rotor 114. The high pressure compressor 110 delivers compressed air into a combustor 116. Products of combustion from the combustor 116 pass over the turbine rotors 114 and 108. In addition, a free turbine 118 drives a shaft 120. Gear reductions 122 and 124 may be positioned intermediate the free turbine 118 and an open pusher rotor 126 driven by shaft 120.

The exhaust duct 128 extends to an exhaust exit 130 which is remote from pusher rotor 126. Thus, the exhaust moves in a path E that does not pass over pusher rotor 126. Now, the benefits of a pusher rotor engine, as mentioned above, can be achieved without the challenges raised by passing the exhaust gas flow across the pusher rotor 126. Open pusher rotor 126 is shown schematically in Figure 1B with a single rotor. However, the engine 100 may additionally include at least one of a counter rotating rotor configured to rotate in the opposite direction as open pusher rotor 126 or guide vanes to straighten the flow from the open pusher rotor 126. For example, Figure 1A illustrates a second, counterrotating rotor.

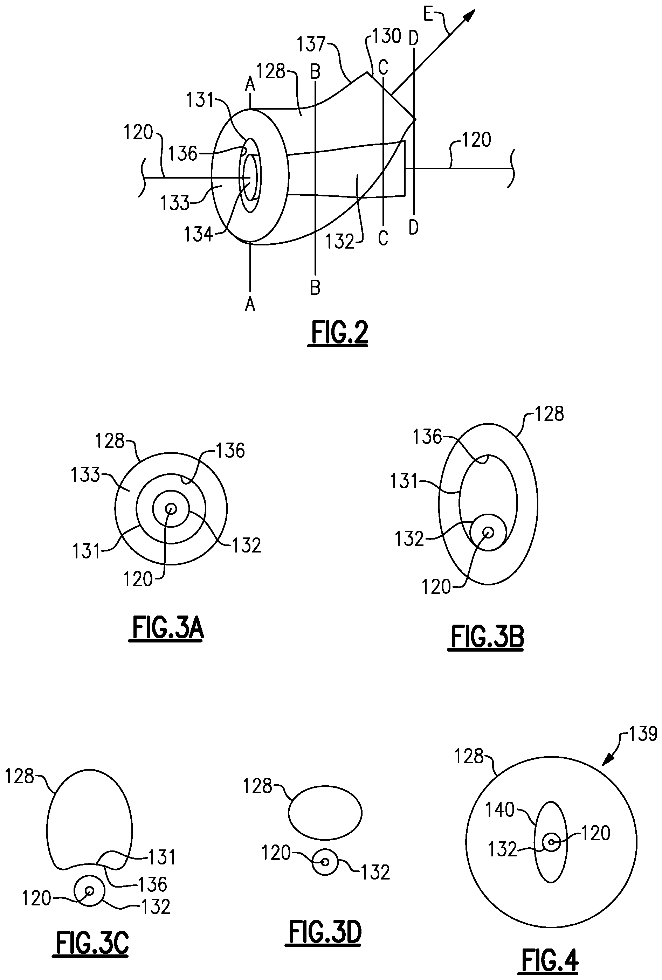

Figure 2 shows an exhaust duct 128. As illustrated, the propulsor driveshaft 120 may extend through a tube 132 that is partially within the exhaust duct 128. The exhaust duct 128 extends to an exhaust exit 130 which is angled away from the shaft 120 and configured to direct the exhaust E away from the shaft 120 and the pusher rotor 126 such that the exhaust E will circumvent the pusher rotor 126.

An inlet 133 into the exhaust 128 includes a ring shape such that there is a wall or housing 131 having an inner periphery 136 spaced outwardly of tube 132. The inner periphery 136 does not communicate with the exhaust 128. Tube 132 is mounted within the wall 131. The shaft 120 passes through the tube 132. As can be seen, a forward area 134 of the tube 132 is isolated from the products of combustion.

Figure 3A shows a cross-section through the exhaust duct 128 and tube 132 at section A-A of Figure 2. The inlet 133 to the exhaust duct 128 is shown. The inner periphery 136 of the wall 131 is shown. The tube 132 is shown spaced from the housing 131. The shaft 120 passes through the tube 132. As can be appreciated, at this cross-section the components are all generally co-axial.

Figure 3B shows a downstream cross-section at line B-B of Figure 2. One can see the outer periphery of the exhaust duct 128 moves to a more oval shape. The tube 132 is no longer in the center of the exhaust duct 128, as the exhaust duct 128 is angled away from the shaft. Returning to Figure 2, this occurs due to the bend 137 in the exhaust duct 128 between the inlet 133 and the exit 130.

Figure 3C shows a more downstream location at section C-C. At this point, the tube 132 is partially outward of the exhaust duct 128. As depicted in Figure 3C the inner wall 131 begins its termination as tube 132 breaks through the edge of the exhaust duct 128. Inner wall 131 and its inner periphery 136 fully terminate once tube 132 is fully outside of exhaust duct 128.

Figure 3D is a view from beyond the exhaust duct 128 at section D-D and shows that the tube 132 is no longer in the exhaust duct 128 but rather is entirely outside. In this manner, the flow of the hot exhaust path E is not directed at the open rotor. The illustrated shapes of the exhaust duct 128 in Figures 3A-3D are merely illustrative examples and are not intended to be so limiting; other shapes and configurations of the exhaust duct 128 are contemplated by this disclosure.

Figure 4 is an embodiment 139 of a tube 132 wherein an outer fairing 140 replaces the wall 131. Outer fairing 140 is positioned outwardly of tube 132 in the products of combustion to improve aerodynamic flow. As can be seen, the fairing 140 includes a generally oval shape for aerodynamic purposes.

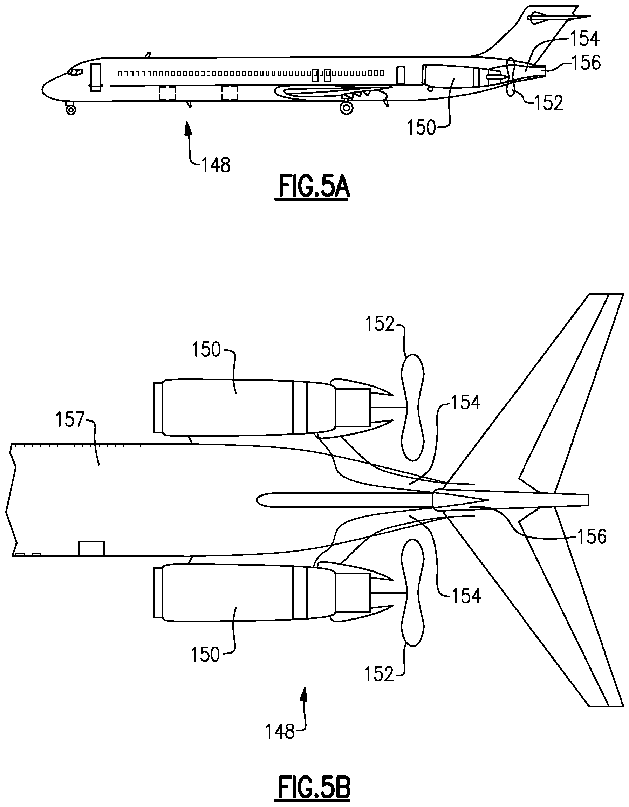

Figure 5A shows an aircraft 148 utilizing the teachings of this disclosure. An engine 150 includes pusher rotor 152. The exhaust 154 is directed away from pusher rotor 152 to an exhaust exit 156 at the aft of the aircraft 148.

Figure 5B is a top view of the aircraft 148. As illustrated, engines 150 may be mounted on each lateral side of the fuselage 157. The exhausts 154 extend to the exits 156 at the aft of the aircraft 148 (e.g., aft portion of the fuselage 157, within an empennage, etc.).

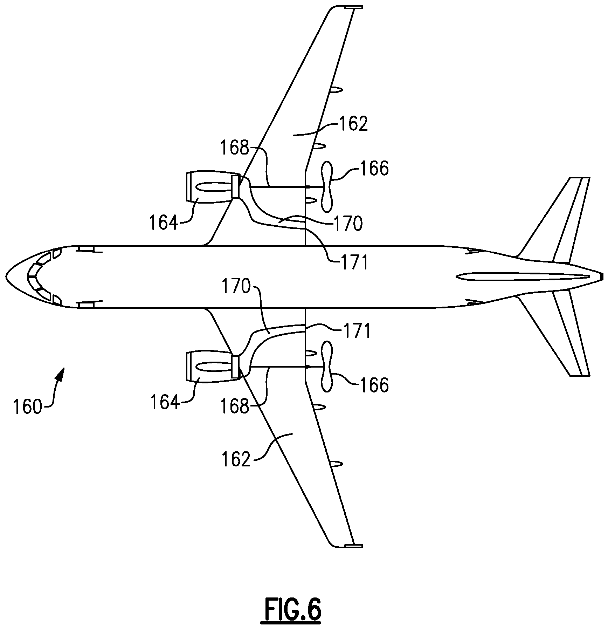

Figure 6 shows an alternative aircraft 160 having engines 164 mounted within wings 162. Shafts 168 extend from the engines 164 to open pusher rotors 166. The exhausts 170 pass through ducting in the wings 162 to outlets 171 which are directed away from the pusher rotors 166.

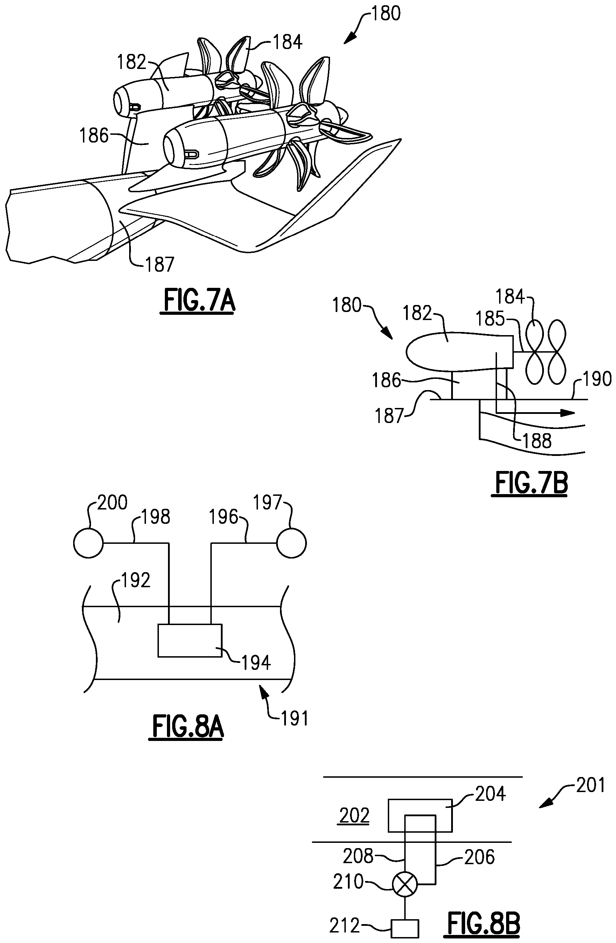

Figure 7A shows another aircraft 180 wherein the engines 182 drive open pusher rotors 184. A mount 186 to a fuselage 187 is also shown. The pusher rotors 184 counter rotate. Although Figures 5A/5B and Figure 6 show only a single rotor they may also have two counter rotating rotors. Alternatively, the pusher open rotor systems may include exit guide vanes.

Figure 7B shows the engine 182 driving the pusher rotor 184 through a shaft 185. The mount 186 receives the exhaust 188, which may extend to an exit 190 located a distance from the pusher rotors 184. In some examples, the exhaust 188 may be routed through ducting in the fuselage 187 to the exit 190.

An optional feature which may be incorporated into an aircraft with a propulsion system as described herein is a waste heat recover system 191 ("system 191") shown in Figure 8A. The system 191 illustrated in Figure 8A includes an exhaust duct 192 that receives a heat exchanger 194. An inlet 196 for a second fluid is directed into the heat exchanger 194, and an outlet 198 of the second fluid is directed out of the heat exchanger 194. Exhaust duct 192 includes features as mentioned above.

By utilizing the system 191, heat in the products of combustion may be recaptured. The second fluid may be fluid which is desirably heated for other uses within the gas turbine engine. As an example, to the system 191 may be used to heat fuel prior to delivery to a combustor. In such an example, the inlet 196 is connected to a fuel supply 197 and outlet 198 is connected to combustor 200. Other uses come within the scope of this disclosure.

Figure 8B illustrates an alternative system 201 in which an exhaust duct 202 includes a heat exchanger 204. The exhaust duct 202 may include features as described above. In the alternative system 201, a cooling fluid is routed through inlet 206 and delivered into the heat exchanger 204, and returns outward of the heat exchanger 204 at line 208. The fluid in line 208 may be heated by the products of combustion and may drive a turbine 210 so as to generate electrical power for use 212.

Although embodiments of this invention have been shown, a worker of ordinary skill in this art would recognize that modifications would come within the scope of this invention. For that reason, the following claims should be studied to determine the true scope and content of this invention.

## Claims

1. A gas turbine engine (100) comprising:
a compressor section (24);
a combustor (26;116) configured to receive compressed air from the compressor section (24);
a turbine section (28) positioned downstream of the combustor (26;116) and configured to receive an exhaust flow from the combustor (26;116), the turbine section (28) comprising a turbine rotor (108,114) configured to drive a compressor rotor (104,110);
an open pusher rotor system mounted downstream of the turbine section (28), and driven by a propulsor turbine rotor (118) in the turbine section (28); and
an exhaust duct (128;192;202) downstream of the propulsor turbine rotor (118), the exhaust duct (128;192;202) extending to an exhaust exit (130;156) such that a flow path of the exhaust flow leaving the exhaust exit is directed away from the open pusher rotor system.

2. The gas turbine engine (100) as set forth in claim 1, wherein the propulsor turbine rotor (118) is a free turbine, which is downstream of the turbine rotor (108;114).

3. The gas turbine engine (100) as set forth in claim 1 or 2, further comprising a drive shaft (120) extending through a tube (132), wherein a first end of the tube (132) is located within the exhaust duct (128;192;202) and a second end of the tube (132) is located outside of the exhaust duct (128;192;202).

4. The gas turbine engine (100) as set forth in claim 3, wherein an exhaust inlet (133) to the exhaust duct (128;192;202) is generally circular, with the tube (132) extending through a center of the circle.

5. The gas turbine engine (100) as set forth in claim 4, wherein the exhaust duct (128;192;202) bends away from the circular shaped exhaust inlet (133), to the exhaust exit (130;156).

6. The gas turbine engine (100) as set forth in claim 4 or 5, wherein the exhaust inlet (133) and the drive shaft (120) are coaxial.

7. The gas turbine engine (100) as set forth in any of claims 3 to 6, wherein a fairing (140) is positioned radially outward of the tube (132), and the fairing (140) having an aerodynamic shape.

8. The gas turbine engine (100) as set forth in any preceding claim, wherein the open pusher rotor system includes at least two counter rotating pusher rotors (36;126;152;166;184).

9. A propulsion system comprising:
a gas turbine engine (100) comprising a compressor section (24), a combustor (26;116) configured to receive compressed air from the compressor section (24), and a turbine section (28) positioned downstream of the combustor (26;116) and configured to receive an exhaust flow from the combustor (26;226), the turbine section (28) comprising a turbine rotor (108,114) configured to drive a compressor rotor;
at least one propulsor (36;126;152;166;184) mounted downstream of the turbine section (28) and driven by a propulsor turbine rotor (118) in the turbine section (28); and
an exhaust duct (128;192;202) downstream of the propulsor turbine rotor (118), the exhaust duct (128;192;202) configured to extend through a wing (162) and/or a fuselage (157;187) of an aircraft (148;160;180) to an exhaust exit (130;156) such that a flow path of the exhaust flow is directed away from the at least one propulsor (36... 184).

10. The propulsion system as set forth in claim 9, wherein the propulsor turbine rotor (118) is a free turbine, which is downstream of the turbine rotor (108;114).

11. The propulsion system as set forth in claim 9 or 10, further comprising a drive shaft (120) extending through a tube (132), wherein a first end of the tube (132) is located within the exhaust duct (128;192;202) and a second end of the tube (132) is located outside of the exhaust duct (128;192;202), optionally wherein:
an exhaust inlet (133) to the exhaust duct (128;192;202) is generally circular shaped, with the tube (132) extending through a center of the circle shape.

12. The propulsion system as set forth in claim 11, wherein at the exhaust exit (130;156), the second end of the tube (132) is fully outside the exhaust duct (128;192;202).

13. The propulsion system as set forth in any of claims 9 to 12, wherein the exhaust duct (128;192;202) is configured to extend through the wing (162) to the exhaust exit (130;156) located at a trailing edge of the wing (162).

14. The propulsion system as set forth in any of claims 9 to 13, wherein the gas turbine engine (100) is configured to be mounted adjacent a tail of the aircraft (148;160;180) through a mount pylon (186), and the exhaust duct (128;192;202) is configured to extend into the mount pylon (186).

15. The propulsion system as set forth in any of claims 9 to 14, wherein the exhaust duct (128;192;202) includes a heat exchanger (194;204) configured to heat a second fluid with the exhaust flow, optionally wherein:
the second fluid is a fuel; and/or
the propulsion system further comprises a generator turbine (210) configured to be driven by the second fluid to generate electrical power.
